# EUROPEAN PATENT APPLICATION

(11) **EP 2 843 521 A1**
(43) Date of publication of application: **04.03.2015**
(21) Application number: 12875636.8
(22) Date of filing: 29.11.2012
(51) Int. Cl.: G06F 3/048

(54) **OPERATION CONTROL CONVERSION METHOD FOR VIRTUAL ICON TOUCHSCREEN APPLICATION PROGRAM, AND TOUCHSCREEN TERMINAL**

(30) Priority: 27.04.2012 CN 201210126872
(71) Applicant: Shenzhen iReadygo Information Technology Co. Ltd, Shenzhen, Guangdong 518000 (CN)
(72) Inventor: QIU, Jian, Shenzhen Guangdong 518000 (CN)
(74) Representative: ABG Patentes, S.L.
(86) International application number: PCT/CN2012/085568
(87) International publication number: WO 2013/159521

(57) **Abstract**

Disclosed is an operation control conversion method for a virtual icon touchscreen application program, which comprises: operating a touchscreen application program; loading a mapping configuration file corresponding to the touchscreen application program, the mapping configuration file comprising mapping rule information between a touchscreen event and a physical input device; obtaining an operation control instruction of the physical input device, and resolving the operation control instruction according to the mapping rule information in the mapping configuration file, so as to convert the operation control instruction to a touchscreen event; and according to the converted touchscreen event, performing operation control on the touchscreen application program. By implementing the embodiments of the present invention, a user can obtain a real operation hand feeling by selecting a physical input device or a touch control manner to perform operation control on a touchscreen application program, thereby improving the operation accuracy and the operation experience.

## Description

### BACKGROUND OF THE INVENTION

### Field of the Invention

The present invention relates to the field of electronics, and specifically to a touch screen terminal control field.

### Related Art

A touch screen is also known as a "touch screen" or a "touch panel", and is an inductive liquid crystal display device capable of receiving input signals such as contacts, when a graphic button on the screen is touched, tactile feedback on the screen can drive various link devices according to a pre-programmed program, which can be used to replace a mechanical button panel and creates vivid audio and video effects through a liquid crystal display screen. The touch screen, as a latest computer input device, is more widely used due to its simple, convenient, natural human-machine interaction manner, and meanwhile, there are more and more applications compatible with the touch screen device.

A touch operation means that a user using a finger or a stylus to click on the touch screen, and such an operation makes operation easier and more intuitive due to good interactivity. As a human-machine interaction interface, the touch screen operation also has the following disadvantages: firstly, the touch screen operation has no real feel of operation, and cannot have force feedback reaction for a pressing action like a real keyboard, which has poor user operation experience for some touch screen applications; secondly, the operation is imprecise, a region where the user actually touch by using the finger or the stylus may be deviated from the touch region that the user thinks or there is a deviation in the touch screen, resulting in that the user's operation of touching a sensitive region has no response and the user experience is poor.

### SUMMARY OF THE INVENTION

The technical problem to be solved by embodiments of the present invention lies in providing a virtual icon touch screen application manipulation conversion method and a touch screen terminal, which can avoid the defect that a virtual icon touch screen application has no feel of operation and cannot be precisely positioned and the problem that user experience is poor in the prior art. To solve the technical problem, an embodiment of the present invention provides a virtual icon touch screen application manipulation conversion method, including:
running a touch screen application;
loading a mapping configuration file corresponding to the touch screen application, the mapping configuration file including mapping rule information between a touch screen event and a physical input device;
acquiring a manipulation instruction of the physical input device, and parsing the manipulation instruction according to the mapping rule information in the mapping configuration file, so as to convert the manipulation instruction into a touch screen event; and
manipulating the touch screen application according to the converted touch screen event.

Before the running a touch screen application, the method further includes:
pre-configuring a mapping configuration file corresponding to the touch screen application, and saving the mapping configuration file.

The acquiring a manipulation instruction of the physical input device, and parsing the manipulation instruction according to the mapping rule information in the mapping configuration file, so as to convert the manipulation instruction into a touch screen event includes:
acquiring a hardware number corresponding to the physical input device when detecting an action of the physical input device;
querying corresponding touch screen geometrical parameter information in the configuration file according to the hardware number; and
converting the action of the physical input device into a touch screen event.

The physical input device includes: a key and/or a joystick.

The mapping rule information between a touch screen event and a physical input device includes:
mapping rule information between a touch screen event, at a position of a virtual icon in the touch screen application, and the key; and/or
mapping rule information between a touch screen event, at a position of a virtual icon in the touch screen application, and the joystick.

Correspondingly, an embodiment of the present invention further provides a touch screen terminal, including:
a starting and running module, for running a touch screen application;
a loading and parsing module, for loading a mapping configuration file corresponding to the touch screen application, the mapping configuration file including mapping rule information between a touch screen event and a physical input device;
an acquisition and conversion module, for acquiring a manipulation instruction of the physical input device, and parsing the manipulation instruction according to the mapping rule information in the mapping configuration file, so as to convert the manipulation instruction into a touch screen event; and
an event execution module, for manipulating the touch screen application according to the converted touch screen event.

The touch screen terminal further includes:
a pre-configuring and saving module, for pre-configuring a mapping configuration file corresponding to the touch screen application, and saving the mapping configuration file.

The acquisition and conversion module includes:
a number acquisition unit, for acquiring a hardware number corresponding to the physical input device when detecting an action of the physical input device;
a query unit, for querying corresponding touch screen geometrical parameter information in the configuration file according to the hardware number; and
a conversion unit, for converting the action of the physical input device into a touch screen event.

The physical input device includes: a key and/or a joystick.
the mapping rule information between a touch screen event and a physical input device includes:
mapping rule information between a touch screen event, at a position of a virtual icon in the touch screen application, and the key; and/or
mapping rule information between a touch screen event, at a position of a virtual icon in the touch screen application, and the joystick.

The embodiments of the present invention have the following beneficial effects: a user can use a physical input device to manipulate a touch screen application, which overcomes the disadvantages that touch screen manipulation has no feel of operation and operation precision is poor.

### BRIEF DESCRIPTION OF THE DRAWINGS

To illustrate the technical solutions according to the embodiments of the present invention or in the prior art more clearly, the accompanying figures for describing the embodiments or the prior art are introduced briefly in the following. Apparently, the accompanying drawings in the following description are only some embodiments of the present invention; persons of ordinary skill in the art can obtain other drawings according to the accompanying drawings without paying any creative efforts.
FIG. 1 is a flow chart of a first embodiment of a virtual icon touch screen application manipulation conversion method according to the present invention;
FIG. 2 is a flow chart of another embodiment of the virtual icon touch screen application manipulation conversion method according to the present invention;
FIG. 3 is a specific flow chart of step S204 in FIG. 2 according to the present invention;
FIG. 4 is a structural view of a first implementation of a touch screen terminal according to the present invention;
FIG. 5 is a structural view of a second implementation of a touch screen terminal according to the present invention; and
FIG. 6 is a schematic interface view of a touch screen application according to the present invention.

### DETAILED DESCRIPTION OF THE EMBODIMENTS

The technical solution of the present invention will be clearly and fully described below with reference to the accompanying drawings. It is obvious that the embodiments to be described are only a part rather than all of the embodiments of the present invention. All other embodiments derived by a person of ordinary skill in the art based on the embodiments of the present invention without carrying out creative activities should fall within the scope of the present invention.

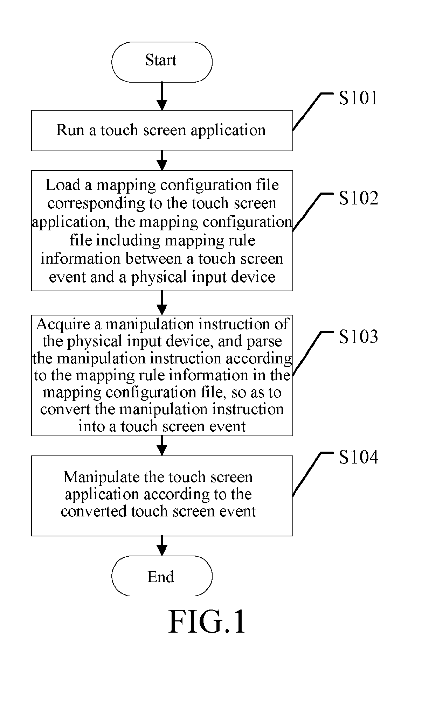

FIG. 1 is a flow chart of a first embodiment of a virtual icon touch screen application manipulation conversion method according to the present invention. The method includes the following steps.

S101: Run a touch screen application.

S102: Load a mapping configuration file corresponding to the touch screen application, the mapping configuration file including mapping rule information between a touch screen event and a physical input device.

Specifically, because different touch screen applications correspond to different mapping configuration files, after a touch screen application is started and run, it is required that a system calls a mapping configuration file matching the touch screen application. Suppose a touch screen terminal has a touch screen application A, a touch screen application B and a touch screen application C installed therein, which are respectively corresponding to mapping configuration files 1, 2 and 3, when a user starts and runs the touch screen application A, the system will call the mapping file 1 corresponding thereto, parse a mapping relationship between a physical input device and a touch screen event at a virtual icon of the touch screen application in the mapping configuration file, and load the mapping relationship into a system memory.

S103: Acquire a manipulation instruction of the physical input device, and parse the manipulation instruction according to the mapping rule information in the mapping configuration file, so as to convert the manipulation instruction into a touch screen event.

Specifically, when a touch screen terminal acquires a manipulation instruction of the physical input device, the system converts, according to the mapping relationship between a physical input device and a touch screen event at a virtual icon of the touch screen application, the manipulation instruction of the physical input device into a touch screen event capable of triggering the touch screen application to execute a corresponding action. When the touch screen terminal obtains manipulation instructions of more than one physical input device at the same time, the system converts current multiple manipulation instructions into the same number of touch screen events according to the mapping rule information.

S104: Manipulate the touch screen application according to the converted touch screen event.

Specifically, the system distributes the touch screen event to a focus window of the touch screen application, so as to execute corresponding operation.

It should be noted that, the touch screen application in the present invention refers to a touch screen application having a virtual icon on a program interface, the virtual icon is located at a fixed position of the touch screen, the user can execute a predetermined operation by touching a predetermined virtual icon, and for a touch screen application which has no virtual icon displayed on the touch screen and whose predetermined operation can be executed in a touch screen fixed region, the fixed region is also a virtual icon with a transparent background color.

The embodiments of the present invention transfers the touch screen operation onto the physical input device through mapping of an external input device and a touch screen event, thereby achieving more precise control and increasing the user's feel of operation.

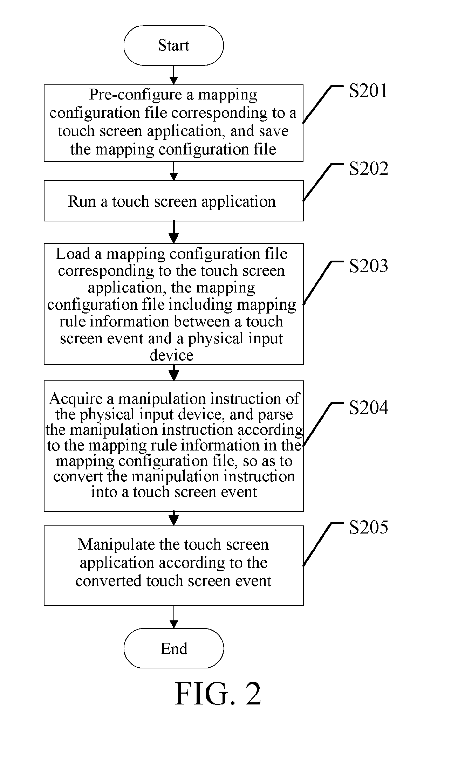

FIG. 2 is a flow chart of another embodiment of a virtual icon touch screen application manipulation conversion method according to the present invention. The method includes the following steps.

S201: Pre-configure a mapping configuration file corresponding to the touch screen application, and save the mapping configuration file.

Specifically, with respect to characteristics of virtual icons on a touch screen application operation interface, different physical input devices forming mapping with touch screen events are set. If the virtual icon is a joystick, a physical joystick forming mapping with the virtual icon is set; if the virtual icon is a button, a key forming mapping with the virtual icon is set; if the virtual icon is a slider, a pressure sensor key forming mapping with the virtual icon is set. Upon completion of setting, mapping relationship information is saved to a mapping configuration file.

S202: Run a touch screen application.

S203: Load a mapping configuration file corresponding to the touch screen application, the mapping configuration file including mapping rule information between a touch screen event and a physical input device.

Specifically, because different touch screen applications correspond to different mapping configuration files, after a touch screen application is started and run, it is required that a system calls a mapping configuration file matching the touch screen application. Suppose a touch screen terminal has a touch screen application A, a touch screen application B and a touch screen application C installed therein, which are respectively corresponding to mapping configuration files 1, 2 and 3, when a user starts and runs the touch screen application A, the system will call the mapping file 1 corresponding thereto, parse a mapping relationship between a physical input device and a touch screen event at a virtual icon of the touch screen application in the mapping configuration file, and load the mapping relationship into a system memory.

S204: Acquire a manipulation instruction of the physical input device, and parse the manipulation instruction according to the mapping rule information in the mapping configuration file, so as to convert the manipulation instruction into a touch screen event.

Specifically, when a touch screen terminal acquires a manipulation instruction of the physical input device, the system converts, according to the mapping relationship between a physical input device and a touch screen event at a virtual icon of the touch screen application, the manipulation instruction of the physical input device into a touch screen event capable of triggering the touch screen application to execute a corresponding action. When the touch screen terminal obtains manipulation instructions of more than one physical input device at the same time, the system converts current multiple manipulation instructions into the same number of touch screen events according to the mapping rule information.

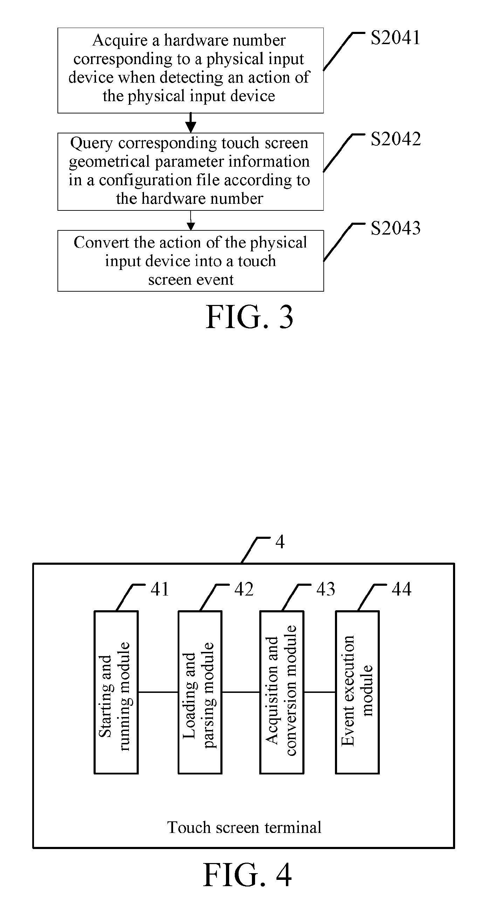

FIG. 3 is a specific flow chart of step S204 in FIG. 2, which includes the following steps.

S2041: Acquire a hardware number corresponding to the physical input device when detecting an action of the physical input device.

Specifically, when a system detects an action of the physical input device, the system may immediately query and acquire a hardware number corresponding to the hardware. If the system detects swing of a joystick, the system may immediately query and acquire that a hardware number of the joystick is 11, and then execute next step.

S2042: Query corresponding touch screen geometrical parameter information in the configuration file according to the hardware number.

Specifically, the mapping relationship in the mapping configuration file is a mapping relationship between geometrical parameter information of the touch screen event at the virtual icon and a hardware number of the physical input device, and geometrical parameter information of the touch screen event, queried by the system by using the obtained hardware number 11 of the joystick, mapped with the hardware number 11 is: center point coordinates (77, 450) and a maximum offset of 50 pixels.

S2043: Convert the action of the physical input device into a touch screen event.

Specifically, the physical joystick is an analog input device, capable of inputting displacement information in horizontal and vertical directions, and in order to achieve conversion between a joystick and a virtual joystick touch screen event, it is necessary to match analog input of the physical joystick with pixel movement of the virtual joystick. For example, a maximum offset of the physical joystick is 65535 scales, a maximum offset of the virtual joystick is 50 pixels, and if the two offset parameters are proportional, it can be achieved that physical joystick input is converted into virtual joystick pixel output, so as to determine coordinates of a center point of the virtual joystick, and when the physical joystick swings to left by a half of a full scale, the corresponding virtual joystick touch screen event is a touch screen event that a finger holds the coordinates (77, 450) of the touch screen to offset 25 pixels to the left.

S205: Manipulate the touch screen application according to the converted touch screen event.

The embodiment of the present invention does not need to use an application interface, but can transfer a touch screen operation onto a physical input device by only setting a mapping relationship between the physical input device and the touch screen, thereby achieving more precise control and increasing the user's feel of operation.

FIG. 4 is a structural view of a first implementation of a touch screen terminal according to the present invention, and the touch screen terminal includes the following modules.

A starting and running module 41 is used for running a touch screen application.

A loading and parsing module 42 is used for loading a mapping configuration file corresponding to the touch screen application, the mapping configuration file including mapping rule information between a touch screen event and a physical input device.

Specifically, because different touch screen applications correspond to different mapping configuration files, after the starting and running module 41 runs a touch screen application, it is required that a system calls a mapping configuration file matching the touch screen application. Suppose a touch screen terminal has a touch screen application A, a touch screen application B and a touch screen application C installed therein, which are respectively corresponding to mapping configuration files 1, 2 and 3, when the starting and running module 41 runs the touch screen application A, the loading and parsing module 42 will call the mapping file 1 corresponding thereto, parse a mapping relationship between a physical input device and a touch screen event at a virtual icon of the touch screen application in the mapping configuration file, and load the mapping relationship into a system memory.

An acquisition and conversion module 43 is used for acquiring a manipulation instruction of the physical input device, and parsing the manipulation instruction according to the mapping rule information in the mapping configuration file, so as to convert the manipulation instruction into a touch screen event.

Specifically, when the touch screen terminal acquires a manipulation instruction of the physical input device, the acquisition and conversion module 43 converts, according to the mapping relationship between a physical input device and a touch screen event at a virtual icon of the touch screen application, the manipulation instruction of the physical input device into a touch screen event capable of triggering the touch screen application to execute a corresponding action. When the touch screen terminal obtains manipulation instructions of more than one physical input device at the same time, the acquisition and conversion module 43 converts current multiple manipulation instructions into the same number of touch screen events according to the mapping rule information.

An event execution module 44 is used for manipulating the touch screen application according to the converted touch screen event.

Specifically, the event execution module 44 distributes the touch screen event to a focus window of the touch screen application, so as to execute corresponding operation.

It should be noted that, the touch screen application in the present invention refers to a touch screen application having a virtual icon on a program interface, the virtual icon is located at a fixed position of the touch screen, the user can execute a predetermined operation by touching a predetermined virtual icon, and for a touch screen application which has no virtual icon displayed on the touch screen and whose predetermined operation can be executed in a touch screen fixed region, the fixed region is also a virtual icon with a transparent background color.

The embodiment of the present invention transfers the touch screen operation onto the physical input device through mapping of an external input device and a touch screen event, thereby achieving more precise control and increasing the user's feel of operation.

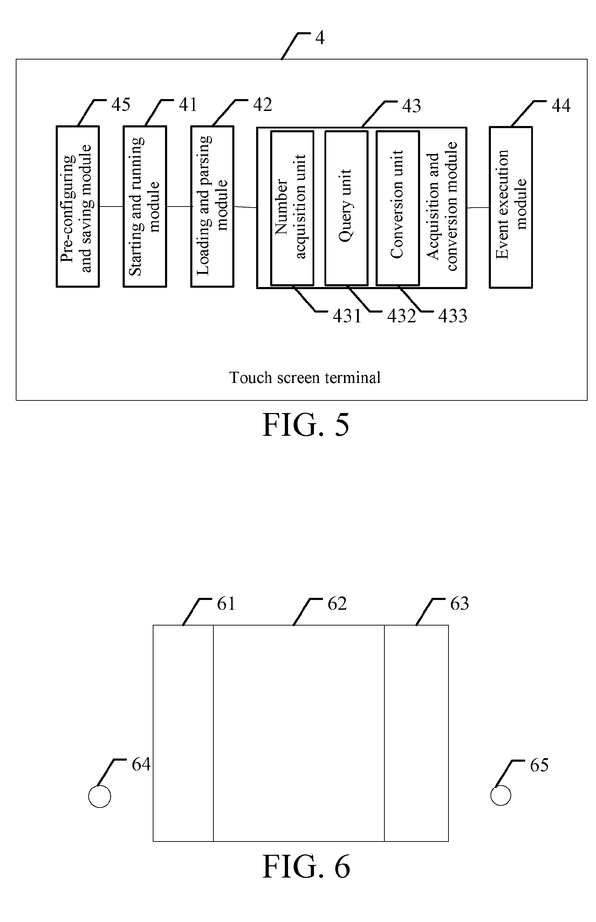

FIG. 5 is a structural view of a second implementation of a touch screen terminal according to the present invention. It can be seen from FIG. 5 that, this embodiment also includes a starting and running module 41, a loading and parsing module 42, an acquisition and conversion module 43 and an event execution module 44, and in addition, further includes:
a pre-configuring and saving module 45, for pre-configuring a mapping configuration file corresponding to the touch screen application, and saving the mapping configuration file.

Specifically, with respect to characteristics of virtual icons on a touch screen application operation interface, the pre-configuring and saving module 45 sets different physical input devices forming mapping with touch screen events. If the virtual icon is a joystick, the pre-configuring and saving module 45 sets a physical joystick forming mapping with the virtual icon; if the virtual icon is a button, the pre-configuring and saving module 45 sets a key forming mapping with the virtual icon; if the virtual icon is a slider, the pre-configuring and saving module 45 sets a pressure sensor key forming mapping with the virtual icon. Upon completion of setting, the pre-configuring and saving module 45 saves mapping relationship information to a mapping configuration file.

The acquisition and conversion module 43 includes:
a number acquisition unit 431, for acquiring a hardware number corresponding to the physical input device when detecting an action of the physical input device;
a query unit 432, for querying corresponding touch screen geometrical parameter information in the configuration file according to the hardware number; and
a conversion unit 433, for converting the action of the physical input device into a touch screen event.

Specifically, a racing game controlled by a key is used for description. Referring to FIG. 6, a rectangular region 61 is a game brake control region, and a car can be braked immediately when any point in the region is clicked. A rectangular region 62 is a game display region, a rectangular region 63 is a game acceleration/deceleration control region, clicking pixel points in the rectangular regions sequentially from top to bottom can control the speed of the car from slow to fast, 64 indicates a physical key A, 65 indicates a pressure sensor key B, the physical key A is mapped with a touch screen event at the rectangular region 61, and the pressure sensor key B is mapped with a touch screen event at the rectangular region 63.

The acceleration/deceleration control region controls a continuously changing process, at this time, a key with a sensor is used for mapping, and because the sensor is generally used for detecting an analog signal, that is, a continuously changing signal, a continuously changing signal actually input externally can be converted into a continuously changing process of pixels on the touch screen. The pressure sensor key B is used to map the touch screen event of the acceleration/deceleration control region, and a common key A is used to map the brake control region.

When the key A is pressed, the system generates an interruption, the number acquisition unit 431 acquires a key value 14 corresponding to the key A, the query unit 432 finds corresponding touch screen geometrical parameter information in the mapping configuration file according to the key value 14, where the touch screen geometrical parameter information is: center point coordinates (28, 228) and a maximum offset of 0 pixel, the conversion unit 433 converts the pressing action of the key A into a single-click event at the touch screen (28, 228), and the center point coordinates are coordinate values of any point in the brake control region.

When the key B is pressed, the system generates an interruption, the number acquisition unit 431 acquires a key value 15 corresponding to the key B, the query unit 432 finds corresponding touch screen geometrical parameter information in the mapping configuration file according to the key value 15, where the touch screen geometrical parameter information is: center point coordinates (763, 2), a maximum offset of -470 pixels, and an offset angle of -270 degrees, the conversion unit 433 converts the pressing action of the key B into a touch screen event along a γ-axis negative direction taking the touch screen coordinates (763, 2) as a starting point. The maximum scale value of a pressure sensor is M, the maximum offset pixel in a γ-axis negative direction of the acceleration/deceleration control region is N, a proportional coefficient is k=N/M, suppose an analog input by the pressure button is P, the corresponding pixel offset on the touch screen is k·P pixels, where M, N, P are integers, and at this time, the conversion unit 433 converts the pressing action of the key B into a touch action at touch screen coordinates (763, 2+k·P).

The embodiment of the present invention does not need to use an application interface, but can transfer a touch screen operation onto a physical input device by only setting a mapping relationship between the physical input device and the touch screen, thereby achieving more precise control and increasing the user's feel of operation.

Persons of ordinary skill in the art should understand that that all of or a part of processes in the method according to the embodiments may be implemented by a computer program instructing relevant hardware. The program may be stored in a computer readable storage medium. When the program is executed, the processes of the method according to the embodiments of the present invention are performed. The storage medium may be a magnetic disk, an optical disc, a read-only memory (ROM) or a random access memory (RAM).

The above is merely a preferred embodiment of the present invention, and certainly cannot be used to limit the scope of the present invention. Persons of ordinary skill in the art should understand that equivalent variations implementing all or a part of the processes of the embodiment according to the claims of the present invention shall fall within the scope of the present invention.

## Claims

1. A virtual icon touch screen application manipulation conversion method, comprising:
running a touch screen application;
loading a mapping configuration file corresponding to the touch screen application, the mapping configuration file comprising mapping rule information between a touch screen event and a physical input device;
acquiring a manipulation instruction of the physical input device, and parsing the manipulation instruction according to the mapping rule information in the mapping configuration file, so as to convert the manipulation instruction into a touch screen event; and
manipulating the touch screen application according to the converted touch screen event.

2. The method according to claim 1, before the running a touch screen application, further comprising:
pre-configuring a mapping configuration file corresponding to the touch screen application, and saving the mapping configuration file.

3. The method according to claim 2, wherein, the acquiring a manipulation instruction of the physical input device, and parsing the manipulation instruction according to the mapping rule information in the mapping configuration file, so as to convert the manipulation instruction into a touch screen event comprises:
acquiring a hardware number corresponding to the physical input device when detecting an action of the physical input device;
querying corresponding touch screen geometrical parameter information in the configuration file according to the hardware number; and
converting the action of the physical input device into a touch screen event.

4. The method according to any one of claims 1 to 3, wherein, the physical input device comprises: a key and/or a joystick.

5. The method according to claim 4, wherein, the mapping rule information between a touch screen event and a physical input device comprises:
mapping rule information between a touch screen event, at a position of a virtual icon in the touch screen application, and the key; and/or
mapping rule information between a touch screen event, at a position of a virtual icon in the touch screen application, and the joystick.

6. A touch screen terminal, comprising:
a starting and running module, for running a touch screen application;
a loading and parsing module, for loading a mapping configuration file corresponding to the touch screen application, the mapping configuration file comprising mapping rule information between a touch screen event and a physical input device;
an acquisition and conversion module, for acquiring a manipulation instruction of the physical input device, and parsing the manipulation instruction according to the mapping rule information in the mapping configuration file, so as to convert the manipulation instruction into a touch screen event; and
an event execution module, for manipulating the touch screen application according to the converted touch screen event.

7. The touch screen terminal according to claim 6, further comprising:
a pre-configuring and saving module, for pre-configuring a mapping configuration file corresponding to the touch screen application, and saving the mapping configuration file.

8. The touch screen terminal according to claim 7, wherein, the acquisition and conversion module comprises:
a number acquisition unit, for acquiring a hardware number corresponding to the physical input device when detecting an action of the physical input device;
a query unit, for querying corresponding touch screen geometrical parameter information in the configuration file according to the hardware number; and
a conversion unit, for converting the action of the physical input device into a touch screen event.

9. The touch screen terminal according to any one of claims 6 to 8, wherein, the physical input device comprises: a key and/or a joystick.

10. The touch screen terminal according to claim 9, wherein, the mapping rule information between a touch screen event and a physical input device comprises:
mapping rule information between a touch screen event, at a position of a virtual icon in the touch screen application, and the key; and/or
mapping rule information between a touch screen event, at a position of a virtual icon in the touch screen application, and the joystick.
